# EUROPEAN PATENT SPECIFICATION

(11) **EP 3 049 634 B1**
(45) Date of publication and mention of the grant of the patent: **27.02.2019**
(21) Application number: 13799101.4
(22) Date of filing: 26.09.2013
(51) Int. Cl.: F01D 25/00, F01D 5/14, F01D 5/22

(54) **ROTOR STAGE OF AXIAL TURBINE WITH AN ADAPTIVE REGULATION TO DYNAMIC STRESSES**
ROTORSTUFE EINER AXIALTURBINE MIT ADAPTIVER REGELUNG NACH DYNAMISCHEN BELASTUNGEN
ÉTAGE ROTORIQUE DE TURBINE AXIALE, À RÉGULATION ADAPTIVE AUX CONTRAINTES DYNAMIQUES

(43) Date of publication of application: 03.08.2016
(73) Proprietor: Franco Tosi Meccanica S.p.A., 20025 Legnano (MI) (IT)
(72) Inventor: PESATORI, Emanuel, 20025 Legnano (Ml) (IT); SANVITO, Massimiliano, 20025 Legnano (Ml) (IT); BISTOLFI, Simone, 20025 Legnano (Ml) (IT); BACHSCHMID, Nicolo, 20025 Legnano (Ml) (IT); FERRANTE, Michele, 20025 Legnano (Ml) (IT); POLLONI, Marco, 20025 Legnano (Ml) (IT)
(74) Representative: Forattini, Amelia
(86) International application number: PCT/IB2013/002140
(87) International publication number: WO 2015/044699

(56) References cited:
- FR-A- 1 252 766
- JP-A- 50 144 803
- JP-A- 54 138 910
- JP-A- 56 143 301
- JP-A- 57 002 405
- JP-A- 57 056 606
- JP-A- S58 176 402
- JP-U- 49 120 901
- US-A- 3 990 813

## Description

The present invention relates to a rotor stage of an axial turbine, a rotor vane and an attenuator.

### FIELD OF THE INVENTION

The bladed rotor stages of a gas or steam turbine are formed by a series of vanes arranged around a shaft adapted to rotate around an axis. A plurality of housings, each adapted to receive a vane root that is impeded from moving in a radial direction, are made on the shaft so as to resist the centrifugal force. The vanes comprise a root and a blade ending with a blade tip at the top of the blade. The blade has, in turn, a concave part or pressure side and a convex part or suction side, with a possible twist in radial direction taking account of the relative speed of the fluid passing through the ducts formed between subsequent rotor vanes, when the rotor is moving. With respect to the direction and way the blade is hit by the fluid, the vane blade has a leading edge and a trailing edge whose distance, named chord, is determined by a section taken on a cylindrical surface coaxial with the turbine axis when the vane is arranged on the shaft in an operating position. The vane blade arranged on the shaft in an operating position extends mainly in radial direction. In different turbine stages, the blades become longer and longer downstream, so as to allow a constant mass flow of fluid to pass when pressure decreases. At the vane tips there can be a strap, intended to limit the fluid flow outside the rotor ducts formed between subsequent vanes.

Because of their extension in a radial direction, the vanes constrained to the rotor shaft can be subjected to dynamic excitations which, without control, can damage the vane itself, the rotor and generally the turbine. Moreover, low frequency dynamic excitations, for example 50 Hz, are generally much more intense and dangerous than dynamic excitations at higher frequencies, for example 250 Hz.

### KNOWN PREVIOUS ART

Various devices for dampening the vibrations of rotor vanes have been studied in order to limit the deformations caused by the dynamic excitations.

In FR 2 955 142 - A1, a device for dampening the vibrations of turbine vanes, adapted to be arranged at recesses formed on the straps, at the vane tips, and adapted to have a point rest, is described.

In GB 2467582 a vibration damper for rotor vanes is described, adapted to engage in opposed recesses formed in the straps of two subsequent rotor vanes, and made of a material adapted to expand as temperature increases, for example a shape memory material.

Also in US 7104758 B2 is described a damper arranged in a recess obtained between two opposed straps. The damper is cylindrically formed and has a size smaller than the recess, being therefore free to move inside it and applying its dampening action only when pushed outwards against the recess walls by the centrifugal force.

At AIAS Congress 2011 held in Palermo 7 to 10 September 2011, a study (No. 132) was presented in the name of Zucca, Firrone e Gola, entitled "Smorzatori sotto-pala per turbomacchine: un nuovo metodo basato sul calcolo simultaneo delle forze statiche e dinamiche di contatto", wherein a prism shaped damper with a triangular cross-section arranged flush with the root between two subsequent vanes, is illustrated.

In US 8066479 B2 another kind of under-vane damper is illustrated.

In JP 56 143301A, JP 57 056606 A and JP 54 138910 A different kinds of attenuators are shown, adapted to be arranged between two subsequent vanes and, among these, in JP 57 056606 A an attenuator is shown composed of two portions not connected to each other. JP S 58 176 402 discloses another example of rotor with an attenuator.

In JP 50 144803A there is an attenuator formed by two mutually connected portions.

In different cases, the vanes are provided with cantilevered connecting elements, protruding from each blade, in a substantially tangential direction, one on the concave side and the other one on the convex side. When the rotor is moving, due to the centrifugal force, such connecting elements tend to tilt outwards and the vanes tend to extend, thereby changing the twist. When the rotating speed is sufficiently quite high, the connecting element protruding from the convex side of a blade, is adapted to press against the corresponding connecting element, the latter protruding from the convex side of the subsequent vane. This contact between connecting elements of subsequent vanes causes a vibration dampening. An example of such a damping device is provided by US 2011/0142654 A1. In this document it is shown that connecting and rest elements of adjacent vanes, which are structurally similar to a cantilever shelf, contact with each other because of a deformation caused by the centrifugal force. According to some embodiments, one of the connecting elements can have a very small length such as to be a simple step or rest element.

A problem of the rotor vane assemblies having cantilevered connecting elements is represented in that during the assembling step, the connecting elements of subsequent vanes can cause heavy interferences requiring in some case a mechanical spreader for the assembly of the last vane of a rotor array.

Another problem is that the described devices only dampen the vibrations, without using any other method to make the vane assembly less sensitive to dynamic excitations.

Another problem is that, in some cases, there may be a poor effectiveness in damping provided by the present methods.

Therefore, it is an object of the present invention to provide a rotor vane assembly able to overcome the mentioned drawbacks.

Particularly, it is an object to allow a more effective vibration damping, another object is to allow an easier assembling of the vanes and a further object is to implement a rotor vane assembly less sensitive to dynamic excitations.

Said objects are achieved by a rotor stage of an axial turbine, by a vane and a vibration attenuator, whose inventive features are highlighted by the claims.

### BRIEF DESCRIPTION OF THE FIGURES

The invention will be better understood from the following detailed description, provided by way of example only, and therefore not limiting, of two preferred embodiments illustrated in the attached drawings, in which:
Fig. 1 shows a perspective view of a first embodiment according to the invention;
Fig. 2 shows a section of the first embodiment with a plane normal to the radial direction R.
Fig. 3 shows an exploded perspective view of a first embodiment of the vibration attenuator;
Fig. 4 shows a side view of the first embodiment of the vibration attenuator;
Fig. 5 shows a perspective view of a second embodiment of the rotor vane with a vibration attenuator, wherein the attenuator is made in a single piece;
Fig. 6 shows a section of the second embodiment with a plane orthogonal to the radial direction R.

### DETAILED DESCRIPTION OF SOME EMBODIMENTS OF THE PRESENT INVENTION.

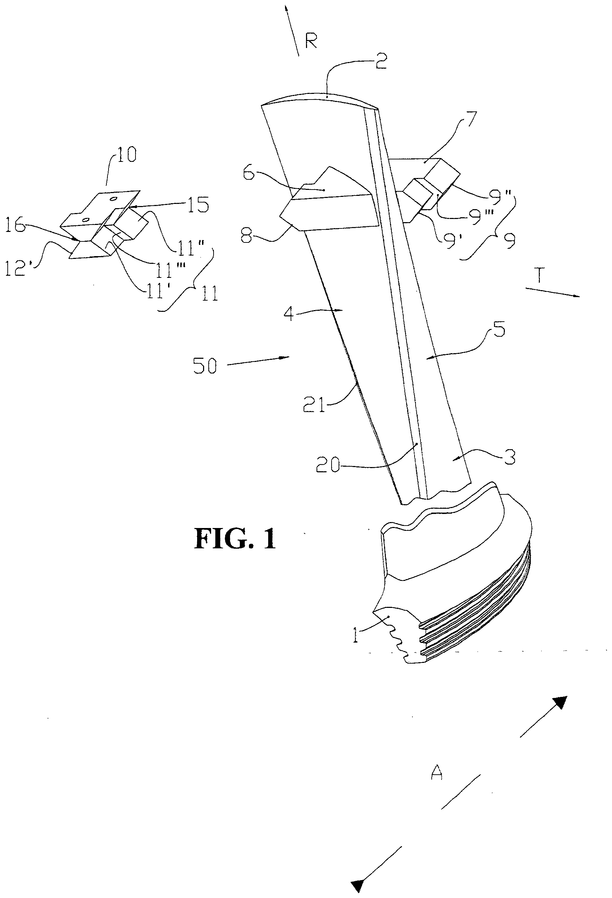

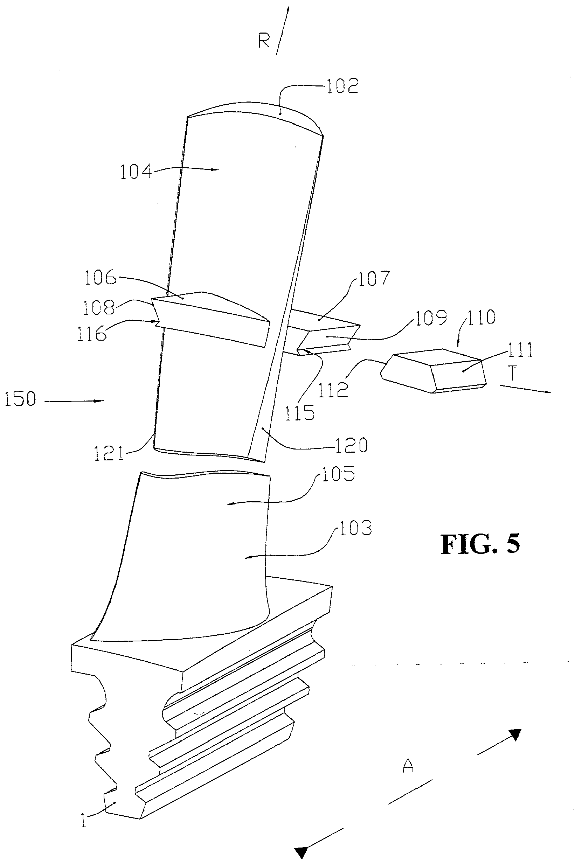

The axis A, the radial direction R and the tangential direction T with reference to the vane arranged on the shaft in an operating position, are shown in figures 1 and 5. The axis A coincides with the rotation axis of the rotor stage and conventionally an upstream to downstream way (shown by the arrows) can be indicated on it, substantially equal to the way of the fluid flowing inside the turbine. The radial direction R lies on a plane orthogonal to axis A and outgoes from the same axis A. The tangential direction T has the same moving direction and way of a point on the rotor stage rotating around the axis and is therefore orthogonal to the plane including the axis A and the radial direction R, passing through that point. This reference frame will be used hereinafter and in the claims assuming that the vane, the attenuator and the various elements constituting them are arranged in operating position in the rotor stage.

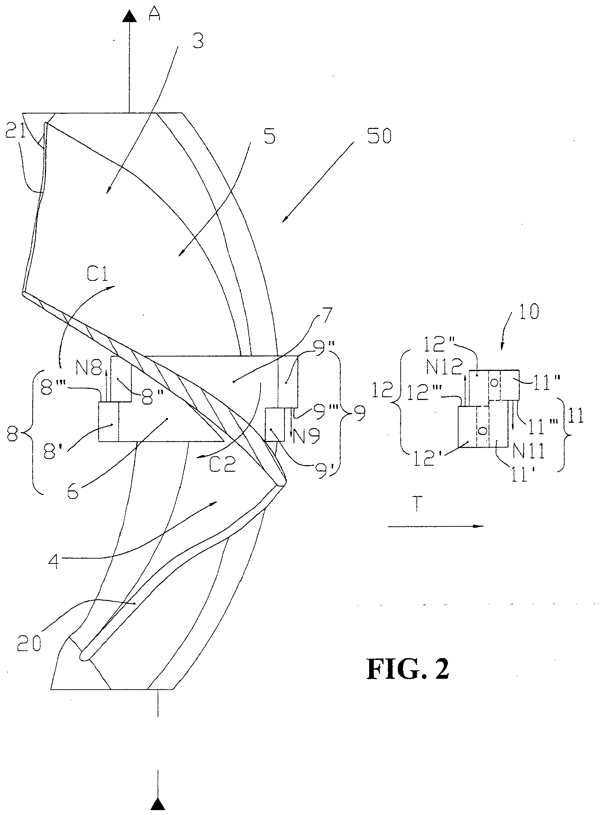

The invention relates to the rotor stage of an axial turbine comprising a shaft, adapted to rotate around an axis A. The rotor stage further comprises a plurality of rotor vanes (50), adapted to be constrained to the shaft, each of which has, according to a first embodiment shown in figures 1 and 2, a root 1, a blade tip 2 and a blade 3, said blade 3 protruding from the top of the root 1 to the blade tip 2 in a substantially radial direction R. The blade 3 has an pressure side 4 usually concave and adapted to directly receive the fluid, and an usually convex suction side 5, delimited in radial direction by a leading edge 20 and a trailing edge 21. The fluid flowing on rotor vanes hits at first the leading edge 20 and leaves the vane from the trailing edge 21, pressing mainly against the vane pressure side. The rotor vane comprises on the blade 3 or on the blade tip 2, in an modification of the first embodiment not shown for the sake of simplicity, a first rest element 6 protruding from the pressure side 4 of the blade 3 in a substantially tangential direction T and a second rest element 7 protruding from the suction side 5, also in a substantially tangential direction T. The rotor stage according to the invention further comprises a plurality of vibration attenuators 10, arranged in between each pair of subsequent vanes. Said attenuators can be separated by the rotor vanes and have a predetermined mass. The attenuator 10 has a first active surface 11 and a second active surface 12, adapted to contact a first reactive surface 8 and a second reactive surface 9 belonging to the first and the second rest element 6, 7, respectively, of two subsequent vanes of a rotor stage. The active surfaces 11, 12 and the corresponding reactive surfaces 8, 9 have complementary shapes and therefore, when in contact to each others in an operating position, adapted to form an extended contacting surface. For example, if an active surface is concave, the corresponding reactive surface is convex. If the active surface is flat, also the corresponding reactive surface is flat. The first and the second active surfaces are the attenuator surfaces that, in operating position, contact the first and the second rest elements of two subsequent vanes, respectively. The contact surfaces of the rest elements are named reactive surfaces.

The active surface and the corresponding reactive surface may comprise two non-contiguous portions or two portions forming an angle. For example, in Fig. 2, the second active surface 12 comprises both the surfaces 12' and 12" arranged inside the dovetail and adapted to contact the second reactive surface 9' and 9", and the surface 12'" adapted to contact the surface 9'" of the first rest element. In this case, the active surface 12 has an extended portion, identified by the numeral 12"', whose normal versor N12 has the same direction and way as the axis A. The reactive surface 9 has an extended portion 9"', whose normal versor N9 has the same direction as the axis A and opposite to the direction of the versor N12.

Referring to the operating position, the active surfaces 11, 12 and the corresponding reactive surfaces 8, 9 have a shape whose orientation, locally defined by a normal versor outgoing from the surface, has a not null axial component, for at least an extended portion of the surface. The axial components of the normal versors outgoing from the second active surface 12 and from the first reactive surface 8 have the same direction of the axis A, whereas the axial components of the normal versors outgoing from the first active surface 11 and from the second reactive surface 9 are opposed to the direction of the versors N8,N12 and are thus upstream-oriented. According to the invention the active surfaces have a normal versor having the same direction as the axis A of the rotor stage.

The attenuator 10 is intended to create a mutual contact between two subsequent vanes preventing, or in any case impeding, the rotation of the vane profiles caused by the centrifugal extension of the vanes. Vane profile means the profile of a circumferential section of the vane obtained by a cylindrical surface provided with circular directrix having the axis coincident with the axis A of the rotor stage. This profile is very similar to the profile obtained forming a section with a plane normal to the radial direction R.

In the attenuator according to the invention, as it is not rigidly constrained to the two rest elements in between which it is arranged, an extended contact surface formed between the active surface and the reactive surface allows also a more effective dampening.

Therefore the attenuator acts both as a tuner and as a damper.

In figures 1 to 4 it can be seen that in the first embodiment the attenuator 10 comprises, referring to the radial direction R outgoing from the axis A of the rotor stage, an upper coupling element 13 and a lower coupling element 14 mutually constrained to each other by way of releasable constraining means, such as screws, bolts or rivets, or else not releasable constraining means.

The attenuators assembly is made much easier providing an upper coupling element and a lower coupling element, because the vanes assembled on the rotor stage have no interferences which otherwise would require a diverter use during the assembling step.

The upper coupling element forms a stop to impede the drop by gravity of the attenuator towards the axis A of the rotor stage when the rotor is stationary, whereas the lower coupling element comprises the active surfaces 11, 12 and impedes the attenuator escape caused by the centrifugal force. When the rotor stage is moving at high speed, the lower coupling element functions as tuner and damper pressing against the rest elements.

At the ends of the attenuator 10 there is a first open recess 15 adapted to accommodate at least one portion of the first rest element 6 and a second open recess 16 adapted to accommodate at least one portion of the second rest element 7, said rest elements belonging to two different vanes arranged in succession in the rotor stage.

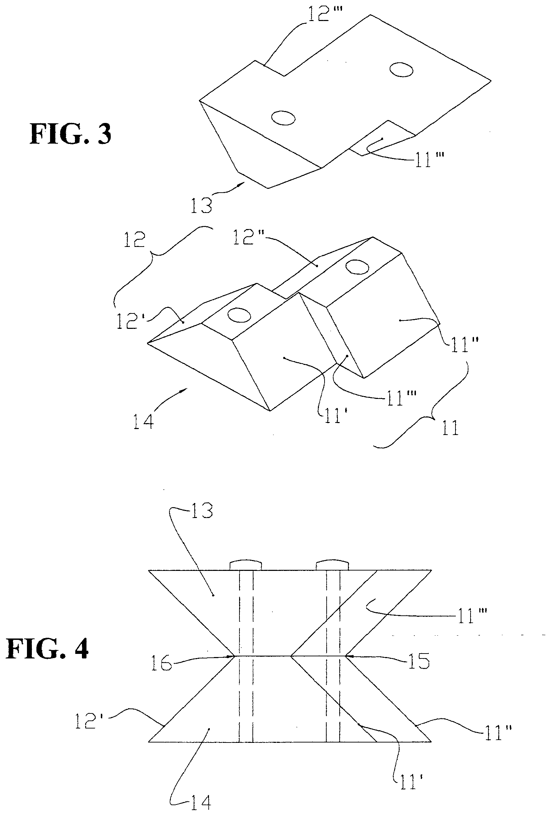

In Fig. 4 it can be seen that the first and the second coupling elements 13, 14, constrained to each other, form said first and second recesses in the attenuator 10, having a substantially dovetailed cross section with a plane normal to axis A.

Dovetail means a recess formed by two joining surfaces, these surfaces may be flat, concave or convex and also have a different length. A dovetailed section can also be defined as a V-shaped section, having shaped straight, concave or convex branches, or U-shaped, or C-shaped, and it could also have branches with different length and could be non-symmetrical, as the recesses 115 and 116 of fig. 5.

Preferably, the attenuator 10 has an aerodynamically flattened shape, so as to not impede the fluid movement among the vanes.

Obviously, on the surfaces of the two coupling elements getting in mutual contact, grooves or small protrusions and complementary depressions can be provided, adapted to precisely position one coupling element on the other.

In figure 1 to 4 it can be seen that the active surfaces 11, 12 and the corresponding reactive surfaces 8, 9 are oriented so that to have a normal versor outgoing from the surface with a not null component in the radial direction R and a not null component in the tangential direction T. The components in the radial direction R of the active surfaces 11, 12 have a way departing from the axis A, whereas the components in the radial directions R of the reactive surfaces 8, 9 have a way pointing to the axis A.

Therefore, thanks to this orientation of the active and reactive surfaces, the two rest elements of two subsequent vanes, protruding towards each other, form an opening tapering as departing from the axis A along the radial direction, whereas the attenuator forms at least one wedge portion.

In this case, when the rotor stage is rotating, the centrifugal force pushes the attenuator 10 outwards and the active surfaces thereof press against the corresponding reactive surfaces of two subsequent vanes, tending to separate them and thereby causing the stiffening of all the rotor assembly.

In figures 3 and 4, it can be seen the attenuator 10 in a flattened shape having two offset parts. The projection of the attenuator 10 on a plane normal to the radial direction R is formed by two offset parts giving substantially a "S" when viewed from the outside in a radial direction R.

In this case, the offset shape results in a surface 11"', included in the first active surface, adapted to rest against the surface 8'" of the rest element, included in the first reactive surface, impeding both the vane profiles from rotating and the axially slide. Obviously, the attenuator could also be formed with a plurality of teeth.

If the vanes were provided to make rotate the rotor stage in a direction opposed to that of fig. 2, the attenuator could be shaped as a "Z" if seen from the outside according to a radial direction R.

The attenuator could be connected to either the first or the second rest elements, or both, by means of a pin.

Advantageously, the attenuator is made of a different material with respect to the vane, for example is made at least partly of a plastic material, adapted to increase the dissipation and damping of vibrations. This solution could be particularly suitable for low-pressure rotor stages in which the temperature is not so high. The term "plastic material" includes composite materials, such as fiberglass or carbon fiber composites containing a plastic matrix.

Between the two coupling elements an intermediate element could even be interposed (not shown for sake of simplicity), which can be made of a material different from the material of the vane or the material of the two coupling elements, for example a rubber or plastic material particularly adapted for the vibration damping. The two coupling elements could also be made of different materials in order to improve the damping, or each coupling element could be composed of several materials, such as a plastic material and a ceramic material, for improving the damping effect.

According to a first embodiment modification, not shown for the sake of simplicity, the first and second rest elements protrude in a substantially tangential direction from the vane blade tip so as to form a strap.

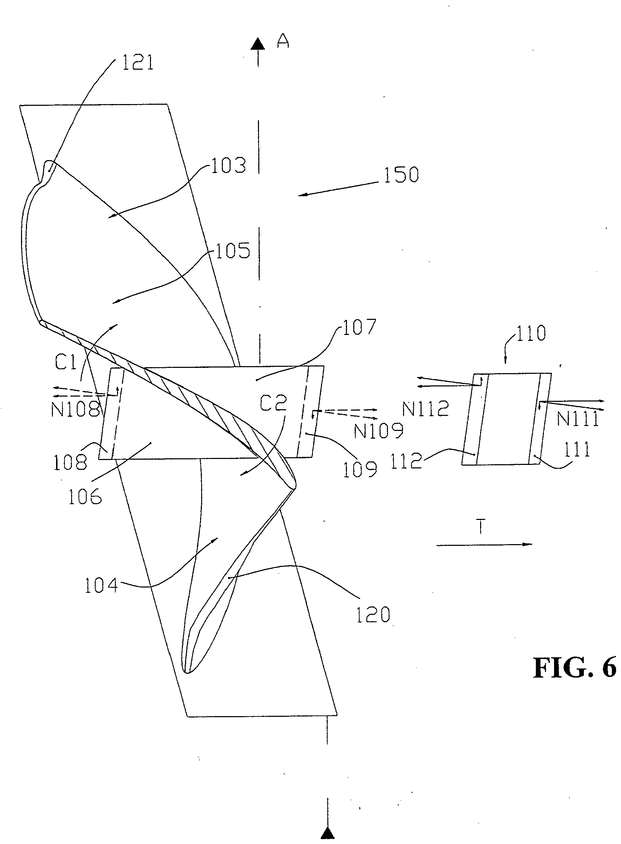

In the example not being part of the invention shown in figures 5 and 6, the first and second rest elements 106 and 107 of two subsequent vanes protrude towards each other forming two recesses facing each other. The attenuator 110, formed in one piece, is shaped so as to project substantially a lozenge on as plane normal to the radial direction R.

In Fig. 6 it can be seen the normal versors outgoing from the active and reactive surfaces having an not null axial component, the axial components of the normal versors (N112, N108) outgoing from the second active surface (112) and the first reactive surface (108) having the same way same of the axis (A), the axial components of the normal versors (N112, N108) outgoing from the first active surface (111) and the second reactive surface (109) having a way opposite to the axis (A).

The arrows C1 and C2 show that the vane profile is urged to rotate by the centrifugal force. The lozenged profile is tilted in the same rotation way and, being interposed between the two reactive surfaces of a first and a second rest element of two subsequent vanes, is compressed so that the lozenged profile tends to flatten.

As in the first embodiment, the normal versor outgoing from the active surfaces 111 and 112 has not null radial and tangential components. This allows the attenuator 110 to be at least partially wedge shaped that, by the centrifugal force, is wedged between the rest elements.

The object of the invention is to protect the rotor stage of an axial turbine as well as the single vane provided with first and second rest element and the single attenuator. The assembly of the rotor stage is made particularly easy by the early assembly of the vanes on the shaft, allowing the following assembly of an attenuator between each pair of subsequent vanes, without the needs of any diverter.

The rotor stage, during its operation, has a high rotation speed, resulting in a high centrifugal force.

Because of this centrifugal force, each of the vane profile tends to rotate around a radial direction R, as shown by the arrows C1 and C2 of fig. 6.

The special orientation of the active and reactive surfaces causes the attenuator to counteract the rotation of the vane profiles. Due to the high speed rotation of the rotor stage and the attenuator counteracting the profile rotation, within the rotor vane assembly the rest elements and the attenuators form a ring in which a compression state is generated stiffening the whole rotor vane assembly and rising its natural frequencies, so that the rotor vane assembly is not sensitive to low frequency dynamic excitations which are the more dangerous. The ability to change the natural frequencies of the vane assembly is named tuning.

Another stiffening effect is provided by the attenuator that wedges in between the rest elements of two subsequent vanes, when the active surfaces of the attenuator are tilted and their radial and tangential components are not null.

An extended contact surface improves the damping.

The stiffening action of the attenuator on the rotor vane array provides an increase of natural frequencies whereas a greater mass of the attenuator allows the natural frequencies to lower or have a less pronounced increase.

In the case of the first embodiment, the attenuator being formed by two parts connectable to each other results in a particularly easy assembly.

In the case of the second embodiment, the attenuator is particularly simple and resistant.

Therefore, the rotor stage according to the invention has an adaptive regulation to dynamic excitations as the attenuator dampens the vibrations and further adjusts the natural frequencies of the rotor stage or tunes the rotor stage on safe frequencies.

## Claims

1. Rotor stage of axial turbine comprising a shaft, adapted to rotate around an axis (A) having conventionally an upstream to downstream **direction** substantially as the fluid flowing within the turbine, and a plurality of rotor vanes (50), each of which has a root (1), a blade tip (2) and a blade (3), said blade (3) protruding from the top of the root (1) to the blade tip (2) in a substantially radial direction (R), said blade (3) having a pressure side (4) and a suction side (5), said rotor vane (50) comprising on the blade (3) or on the blade tip (2) a first rest element (6), protruding from the side of the pressure side (4) in a substantially tangential direction (T) normal to a plane comprising the rotation axis (A) and the radial direction (R), and said rotor vane (50) comprising on the blade (3) or blade tip (2) a second rest element (7) protruding from the side of the suction side (5) in a substantial tangential direction (T) too, said first and second rest element of two subsequent vanes protruding one towards each other, said rotor stage comprising a plurality of attenuators (10) each of **said attenuators (10)** being inserted in contact with said first and second rest element of two subsequent vanes, said attenuator (10) having at least one of a first active surface (11) and a second active surface (12), at least one of the first and the second rest element (6, 7) having a first reactive surface (8) and a second reactive surface (9) respectively, the first active surface (11) being complementary to the first reactive surface (8) and the second active surface (12) being complementary to the second reactive surface (9), the active surfaces and the corresponding reactive surfaces being adapted to form, when contacting each other in an operating position, an extended contacting surface, said active surface (11, 12) and reactive surface (8, 9) each having a shape whose orientation, locally defined by a normal versor (N8, N9, N11, N12) outgoing from the surface, has, for at least an extended portion of the surface, a not null axial component, said axial component, for the second active surface (12) and the first reactive surface (8) having the same **direction** of the axis (A) and for the first active surface (11) and the second reactive surface (9), having a **direction** opposed to the direction of the versors (N9,N11) of the second active surface and the first reactive surface, said attenuator (10) comprising, referring to the radial direction (R) outgoing from the axis (A) of the rotor stage when the attenuator is placed in an operating position, an upper coupling element (13) and a lower coupling element (14) which can be mutually constrained, **characterized in that** at least one of said active surfaces (11, 12) and the corresponding reactive surface (8, 9) have an orientation whereby the normal versor outgoing from the surface has, for at least an extended surface portion, a not null component in the radial direction (R) and a not null component in the tangential direction (T), the active surfaces (11, 12) with the component **direction** way in the radial direction (R) departing from the axis (A), the reactive surfaces (8, 9) with the component **direction** in the radial direction (R) pointing to the axis (A).

2. Rotor stage according to the preceding claim, **characterized in that** said attenuator (10) comprises a first active surface (11) and a second active surface (12), the first rest element (6) having a first reactive surface (8) and the second rest element (7) having a second reactive surface (9), the first active surface (11) being adapted to contact the first reactive surface (8) of a first vane and the second active surface (12) being adapted to contact with the second reactive surface (9) of a second vane when the attenuator (10) is arranged between said first and second vanes in operating position.

3. Rotor stage according to one or more of the claims 1 to 2, **characterized in that** said attenuator (10) has an open recess (15) adapted to accommodate at least one portion between the first and the second rest elements.

4. Rotor stage according to the preceding claim, **characterized in that** said recess (15) is a first recess adapted to accommodate at least one portion of the first rest element (6) and said attenuator (10) comprises a second open recess (16) adapted to accommodate at least one portion of the second rest element (7), said rest elements belonging to two different vanes arranged in succession in the rotor stage.

5. Rotor stage according to one of the claims 3 or 4, **characterized in that** said first and second recesses (15, 16) have a **dovetailed** cross section, with **respect to** a plane **perpendicular** to **said** axis (A).

6. Rotor stage according to one or more of the preceding claims, **characterized in that** the projection on a plane normal to the radial direction (R) of said attenuator (10) has a lozenged shape or composed by at least two offset parts forming substantially a "S" or "Z".

7. Rotor stage according to one or more of the preceding claims, **characterized in that** said attenuator is at least partly made of plastic material, adapted to increase the dissipation and damping of the vibrations.

8. Attenuator (10) adapted to be fitted between two rotor vanes (50) of a rotor stage according to claim 1 adapted to rotate around an axis (A), **characterized by** comprising a first active surface (11) and a second active surface (12), having a shape whose orientation, locally defined by a normal versor outgoing from the surface, has, for at least one extended surface portion, not null axial components, the axial component of the first active surface having a **direction** opposed to the axial component of the second active surface, said active surfaces being complementary to the reactive surfaces of the rest elements of two vanes according to claim 1, so that to form extended contact surfaces when the active surfaces are contacting the reactive surfaces in an operating position, said attenuator comprising, with reference to the radial direction (R) outgoing from the axis (A) of the rotor stage when the attenuator is in an operating position, an upper coupling element (13) and a lower coupling element (14) mutually constrainable, and said attenuator having, on two opposite ends, a first recess (15) and a second recess (16) **having** a **dovetailed** cross section, with **respect to a** plane **perpendicular** to said axis (A).

9. Attenuator (10) according to the preceding claim, **characterized in that** the projection on a plane normal to the radial direction (R) of said attenuator (10) has a lozenged shape or composed by at least two offset parts forming substantially a "S" or "Z".

## Patentansprüche

1. Rotorstufe einer Axialturbine, die eine Welle umfasst, die ausgebildet ist, um sich um eine Achse (A) zu drehen, mit herkömmlicherweise einer Richtung von stromaufwärts zu stromabwärts, im Wesentlichen wie das Fluid, das in der Turbine strömt, und eine Vielzahl von Rotorblättern (50), von denen jedes einen Fuß (1), eine Flügelspitze (2) und einen Flügel (3) hat, wobei der Flügel (3) sich in im Wesentlichen radialer Richtung (R) vom oberen Ende des Fußes (1) zur Flügelspitze (2) erstreckt, wobei der Flügel (3) eine Druckseite (4) und eine Ansaugseite (5) hat, wobei das Rotorblatt (50) am Flügel (3) oder an der Flügelspitze (2) ein erstes Auflageelement (6) umfasst, welches von der Seite der Druckseite (4) in im Wesentlichen tangentialer Richtung (T) senkrecht zu einer Ebene herausragt, die die Drehachse (A) und die radiale Richtung (R) umfasst, und wobei das Rotorblatt (50) am Flügel (3) oder an der Flügelspitze (2) ein zweites Auflageelement (7) umfasst, das von der Seite der Ansaugseite (5) ebenfalls in im Wesentlichen tangentialer Richtung (T) herausragt; wobei das erste und das zweite Auflageelement zweier aufeinanderfolgender Blätter zueinander hin ragen, wobei die Rotorstufe eine Vielzahl von Dämpfungsgliedern (10) umfasst, wobei jedes der Dämpfungsglieder (10) in Kontakt mit dem ersten und dem zweiten Auflageelement zweier aufeinanderfolgender Blätter eingesetzt ist; wobei das Dämpfungsglied (10) eine erste aktive Oberfläche (11) und/oder eine zweite aktive Oberfläche (12) hat, wobei das erste und/oder das zweite Auflageelement (6, 7) eine erste reaktive Oberfläche (8) und eine zweite reaktive Oberfläche (9) haben, wobei die erste aktive Oberfläche (11) komplementär zur ersten reaktiven Oberfläche (8) ist und die zweite aktive Oberfläche (12) komplementär zur zweiten reaktiven Oberfläche (9) ist; wobei die aktiven Oberflächen und die entsprechenden reaktiven Oberflächen ausgelegt sind, um, wenn sie einander in einer Arbeitsposition berühren, eine verlängerte Kontaktfläche zu bilden; wobei sowohl die aktive Oberfläche (11, 12) als auch die reaktive Oberfläche (8, 9) eine Form haben, deren Ausrichtung, lokal bestimmt durch einen senkrechten Einheitsvektor (N8, N9, N11, N12), der von der Oberfläche ausgeht, über mindestens einen erweiterten Abschnitt der Oberfläche eine axiale Komponente hat, die nicht gleich null ist, wobei die axiale Komponente für die zweite aktive Oberfläche (12) und die erste reaktive Oberfläche (8) dieselbe Richtung der Achse (A) hat und für die erste aktive Oberfläche (11) und die zweite reaktive Oberfläche (9) eine Richtung hat, die der Richtung der Einheitsvektoren (N9, N11) der zweiten aktiven Oberfläche und der ersten reaktiven Oberfläche entgegengesetzt ist; wobei das Dämpfungsglied (10), mit Bezug auf die radiale Richtung (R), ausgehend von der Achse (A) der Rotorstufe, wenn das Dämpfungsglied in einer Arbeitsposition positioniert ist, ein oberes Kopplungselement (13) und ein unteres Kopplungselement (14) umfasst, die zueinander eingeschränkt sein können; **dadurch gekennzeichnet, dass** mindestens eine der aktiven Oberflächen (11, 12) und die entsprechende reaktive Oberfläche (8, 9) eine Ausrichtung haben, wodurch der senkrechte Einheitsvektor, der von der Oberfläche ausgeht, über mindestens einen erweiterten Oberflächenabschnitt eine Komponente in die radiale Richtung (R) hat, die nicht gleich null ist, und eine Komponente in die tangentiale Richtung (T), die nicht gleich null ist; wobei die aktiven Oberflächen (11, 12) mit der Komponentenrichtung in die radiale Richtung (R) von der Achse (A) ausgehen, wobei die reaktiven Oberflächen (8, 9) mit der Komponentenrichtung in die radiale Richtung (R) zur Achse (A) hin weisen.

2. Rotorstufe gemäß dem obigen Anspruch, **dadurch gekennzeichnet, dass** das Dämpfungsglied (10) eine erste aktive Oberfläche (11) und eine zweite aktive Oberfläche (12) umfasst, wobei das erste Auflageelement (6) eine erste reaktive Oberfläche (8) hat und das zweite Auflageelement (7) eine zweite reaktive Oberfläche (9) hat, wobei die erste aktive Oberfläche (11) ausgelegt ist, um die erste reaktive Oberfläche (8) eines ersten Blatts zu berühren und die zweite aktive Oberfläche (12) ausgelegt ist, um die zweite reaktive Oberfläche (9) eines zweiten Blatts zu berühren, wenn das Dämpfungsglied (10) in der Arbeitsposition zwischen dem ersten und dem zweiten Blatt angeordnet ist.

3. Rotorstufe gemäß einem oder mehreren der Ansprüche 1 bis 2, **dadurch gekennzeichnet, dass** das Dämpfungsglied (10) eine offene Vertiefung (15) hat, ausgelegt, um mindestens einen Abschnitt zwischen dem ersten und dem zweiten Auflageelement aufzunehmen.

4. Rotorstufe gemäß dem obigen Anspruch, **dadurch gekennzeichnet, dass** die Vertiefung (15) eine erste Vertiefung ist, ausgebildet, um mindestens einen Teil des ersten Auflageelements (6) aufzunehmen, und das Dämpfungsglied (10) eine zweite offene Vertiefung (16) umfasst, ausgebildet, um mindestens einen Teil des zweiten Auflageelements (7) aufzunehmen; wobei die Auflageelemente zu zwei verschiedenen Blättern gehören, die in der Rotorstufe hintereinander angeordnet sind.

5. Rotorstufe gemäß einem der Ansprüche 3 oder 4, **dadurch gekennzeichnet, dass** die erste und die zweite Vertiefung (15, 16) einen schwalbenschwanzförmigen Querschnitt mit Bezug auf eine Ebene senkrecht zu der Achse (A) haben.

6. Rotorstufe gemäß einem oder mehreren der obigen Ansprüche, **dadurch gekennzeichnet, dass** die Projektion auf eine Ebene senkrecht zur radialen Richtung (R) des Dämpfungsglieds (10) eine Rautenform hat oder aus mindestens zwei versetzten Teilen besteht, die im Wesentlichen ein "S" oder "Z" bilden.

7. Rotorstufe gemäß einem oder mehreren der obigen Ansprüche, **dadurch gekennzeichnet, dass** das Dämpfungsglied zumindest teilweise aus Kunststoffmaterial besteht, das ausgebildet ist, um die Dissipation und Dämpfung der Schwingungen zu erhöhen.

8. Dämpfungsglied (10), ausgelegt, um zwischen zwei Rotorblätter (50) einer Rotorstufe gemäß Anspruch 1 eingesetzt zu werden, ausgelegt, um sich um eine Achse (A) zu drehen; **dadurch gekennzeichnet, dass** es eine erste aktive Oberfläche (11) und eine zweite aktive Oberfläche (12) umfasst, mit einer Form, deren Ausrichtung, lokal bestimmt durch einen senkrechten Einheitsvektor, der von der Oberfläche ausgeht, über mindestens einen erweiterten Oberflächenabschnitt axiale Komponenten hat, die nicht gleich null sind, wobei die axiale Komponente der ersten aktiven Oberfläche eine Richtung hat, die der axialen Komponente der zweiten aktiven Oberfläche entgegengesetzt ist; wobei die aktiven Oberflächen komplementär zu den reaktiven Oberflächen der Auflageelemente zweier Blätter gemäß Anspruch 1 sind, um erweiterte Kontaktflächen zu bilden, wenn die aktiven Oberflächen in einer Arbeitsposition die reaktiven Oberflächen berühren; wobei das Dämpfungsglied mit Bezug auf die radiale Richtung (R), die von der Achse (A) der Rotorstufe ausgeht, wenn das Dämpfungsglied in einer Arbeitsposition ist, ein oberes Kopplungselement (13) und ein unteres Kopplungselement (14) umfasst, die zueinander eingeschränkt werden können, und wobei das Dämpfungsglied an zwei gegenüberliegenden Enden eine erste Vertiefung (15) und eine zweite Vertiefung (16) mit schwalbenschwanzförmigem Querschnitt mit Bezug auf eine zu der Achse (A) senkrechten Ebene hat.

9. Dämpfungsglied (10) gemäß dem obigen Anspruch, **dadurch gekennzeichnet, dass** die Projektion auf eine Ebene senkrecht zur radialen Richtung (R) des Dämpfungsglieds (10) eine Rautenform hat oder aus mindestens zwei versetzten Teilen besteht, die im Wesentlichen ein "S" oder "Z" bilden.

## Revendications

1. Étage rotorique de turbine axiale comprenant un arbre adapté pour tourner autour d'un axe (A) présentant généralement une direction d'amont en aval correspondant substantiellement à l'écoulement de fluide à l'intérieur de la turbine, et une pluralité de pales de rotor (50), parmi lesquelles chacune comporte une racine (1), une extrémité d'aube (2) et une aube (3), ladite aube (3) faisant saillie du haut de la base (1) jusqu'à la pointe d'aube (2) dans une direction substantiellement radiale (R), ladite aube (3) présentant un côté pression (4) et un côté aspiration (5), ladite pale de rotor (50) comprenant un premier élément de maintien (6) sur l'aube (3) ou sur la pointe d'aube (2), lequel fait saillie à partir du côté du côté pression (4) dans une direction substantiellement tangentielle (T) normale à un plan comprenant l'axe de rotation (A) et la direction radiale (R), et ladite pale de rotor (50) comprenant un deuxième élément de maintien (7) sur l'aube (3) ou la pointe d'aube (2), lequel fait saillie à partir du côté du côté aspiration (5) également dans une direction substantiellement tangentielle (T), lesdites premier et deuxième élément de maintien de deux pales successives faisant saillie l'un vers l'autre, ledit étage de rotor comprenant une pluralité d'atténuateurs (10), chacun desdits atténuateurs (10) étant inséré en contact avec lesdits premier et deuxième éléments de maintien de deux pales successives, ledit atténuateur (10) présentant au moins l'une parmi une première surface active (11) et une deuxième surface active (12), au moins l'un parmi les premier et deuxième éléments de maintien (6, 7) présentant une première surface réactive (8) et une deuxième surface réactive (9), respectivement, la première surface active (11) étant complémentaire à la première surface réactive (8) et la deuxième surface active (12) étant complémentaire à la deuxième surface réactive (9), les surfaces actives et les surfaces réactives correspondantes étant adaptées pour former, lorsqu'elles se touchent dans une position de fonctionnement, une surface de contact étendue, ladite surface active (11, 12) et ladite surface réactive (8, 9) présentant respectivement une forme dont l'orientation, localement définie par un verseur normal (N8, N9, N11, N12) partant de la surface, présente, au moins pour une partie étendue de la surface, une composante axiale non nulle, ladite composante axiale présentant, pour la deuxième surface active (12) et la première surface réactive (8), la même direction que l'axe (A) et, pour la première surface active (11) et la deuxième surface réactive (9), une direction opposée à la direction des verseurs (N9, N11) de la deuxième surface active et de la première surface réactive,
ledit atténuateur (10) comprenant, en référence à la direction radiale (R) partant de l'axe (A) de l'étage de rotor lorsque l'atténuateur est placé dans une position de fonctionnement, un élément d'accouplement supérieur (13) et un élément d'accouplement inférieur (14) susceptibles d'être contraints mutuellement, **caractérisé en ce que** l'une au moins desdites surfaces actives (11, 12) et la surface réactive correspondante (8, 9) présentant une orientation dans laquelle le verseur normal partant de la surface présente, au moins pour une partie de surface étendue, une composante non nulle dans la direction radiale (R) et une composante non nulle dans la direction tangentielle (T), les surfaces actives (11, 12) avec la direction de composante dans la direction radiale (R) s'éloignant de l'axe (A), les surfaces réactives (8, 9) avec la direction de composante dans la direction radiale (R) pointant vers l'axe (A).

2. Étage de rotor selon la revendication précédente, **caractérisé en ce que** ledit atténuateur (10) comprend une première surface active (11) et une deuxième surface active (12), le premier élément de maintien (6) présentant une première surface réactive (8) et le deuxième élément de maintien (7) présentant une deuxième surface réactive (9), la première surface active (11) étant adaptée pour toucher la première surface réactive (8) d'une première pale et la deuxième surface active (12) étant adaptée pour toucher la deuxième surface réactive (9) d'une deuxième pale lorsque l'atténuateur (10) est disposé entre lesdites première et deuxième pales dans une position de fonctionnement.

3. Étage de rotor selon l'une ou plusieurs des revendications 1 à 2, **caractérisé en ce que** ledit atténuateur (10) comporte une cavité ouverte (15) adaptée pour accueillir au moins une partie entre les premier et deuxième éléments de maintien.

4. Étage de rotor selon la revendication précédente, **caractérisé en ce que** ladite cavité (15) est une première cavité adaptée pour accueillir au moins une partie du premier élément de maintien (6) et ledit atténuateur (10) comprend une deuxième cavité ouverte (16) adaptée pour accueillir au moins une partie du deuxième élément de maintien (7), lesdits éléments de maintien appartenant à deux pales différentes disposées successivement dans l'étage de rotor.

5. Étage de rotor selon l'une des revendications 3 ou 4, **caractérisé en ce que** lesdites première et deuxième cavités (15, 16) présentent une section transversale en queue d'aronde, par rapport à un plan perpendiculaire audit axe (A) .

6. Étage de rotor selon l'une ou plusieurs des revendications précédentes, **caractérisé en ce que** la projection sur un plan normal à la direction radiale (R) dudit atténuateur (10) présente une forme en losange ou composée d'au moins deux parties décalées formant substantiellement un «S» ou un «Z».

7. Étage de rotor selon l'une ou plusieurs des revendications précédentes, **caractérisé en ce que** ledit atténuateur est au moins partiellement constitué d'une matière plastique, adaptée pour favoriser la dissipation et l'amortissement des vibrations.

8. Atténuateur (10) adapté pour être ajusté entre deux pales de rotor (50) d'un étage de rotor selon la revendication 1, adaptées pour tourner autour d'un axe (A), **caractérisé en ce qu'**il comprend une première surface active (11) et une deuxième surface active (12) présentant une forme dont l'orientation, localement définie par un verseur normal partant de la surface, présente, au moins pour une partie étendue de la surface, des composantes axiales non nulles, la composante axiale de la première surface active présentant une direction opposée à la composante axiale de la deuxième surface active, lesdites surfaces actives étant complémentaires aux surfaces réactives des éléments de maintien de deux pales selon la revendication 1, de manière à former des surfaces de contact étendues lorsque les surfaces actives touchent les surfaces réactives dans une position de fonctionnement, ledit atténuateur comprenant, en référence à la direction radiale (R) partant de l'axe (A) de l'étage de rotor lorsque l'atténuateur est placé dans une position de fonctionnement, un élément d'accouplement supérieur (13) et un élément d'accouplement inférieur (14) susceptibles d'être contraints mutuellement, et ledit atténuateur comportant, à deux extrémités opposées, une première cavité (15) et une deuxième cavité (16) présentant une section transversale en forme de queue d'aronde, par rapport à un plan perpendiculaire audit axe (A).

9. Atténuateur (10) selon la revendication précédente, **caractérisé en ce que** la projection sur un plan normal à la direction radiale (R) dudit atténuateur (10) présente une forme en losange ou composée d'au moins deux parties décalées formant substantiellement un «S» ou un «Z».
